# EUROPEAN PATENT APPLICATION

(11) **EP 1 109 052 A2**
(43) Date of publication of application: **20.06.2001**
(21) Application number: 00310549.1
(22) Date of filing: 28.11.2000
(51) Int. Cl.: G02F 1/1335, G02B 5/20

(54) **Color filter substrate for reflective liquid crystal display and reflective liquid crystal display using the same**

(30) Priority: 14.12.1999 JP 35506099
(71) Applicant: ALPS ELECTRIC CO., LTD., Ota-ku Tokyo 145 (JP)
(72) Inventor: Nakamura, Sadao, c/o Alps Electric Co., Ltd, Tokyo 145 (JP); Kobayashi, Masakazu, c/o Alps Electric Co., Ltd, Tokyo 145 (JP); Sone, Takehiko, c/o Alps Electric Co., Ltd, Tokyo 145 (JP); Kusano, Manabu, c/o Alps Electric Co., Ltd, Tokyo 145 (JP); Ishitaka, Yumiko, c/o Alps Electric Co., Ltd, Tokyo 145 (JP)
(74) Representative: Kensett, John Hinton

(57) **Abstract**

A color filter substrate for use in a reflective liquid crystal display, and a reflective liquid crystal display using the above-described color filter substrate are provided. The color filter substrate is provided with a substrate, a reflective layer formed on the substrate, and a color filter layer formed on the reflective layer. The color substrate is arranged to oppose another substrate with a sealing material therebetween and a liquid crystal layer is filled in the gap between the two substrates. The color filter layer of the color filter substrate is formed in a region inside the sealing material, which includes at least an effective display area and a margin area which is outside the effective display area and yet part of visible area so as to reduce light reflected at the reflective layer. A reflective liquid crystal display using the above-described color filter substrate is also provided.

## Description

### BACKGROUND OF THE INVENTION

### 1. Field of the Invention

The present invention relates to a color filter substrate for use in a reflective liquid crystal display and to a reflective liquid crystal display employing the same.

### 2. Description of the Related Art

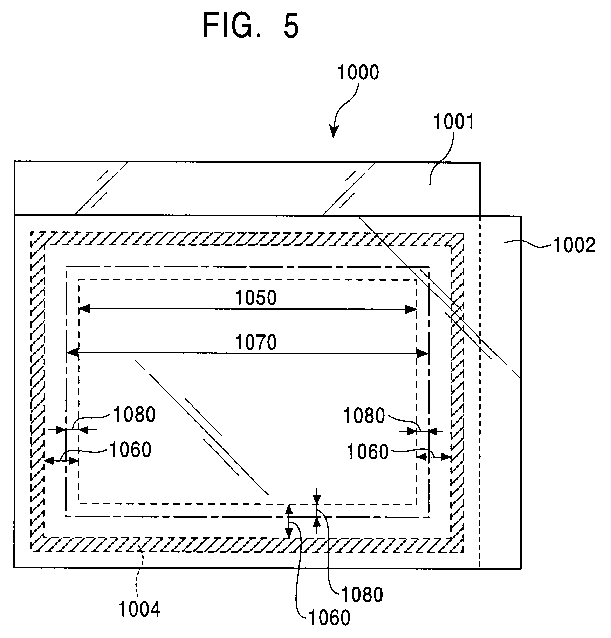

Fig. 5 is a perspective plan view illustrating the structure of a typical liquid crystal display 1000. The structure of this liquid crystal display will be briefly explained with reference to Fig. 5. As shown in Fig. 5, a substrate (lower substrate) 1001 and a counter substrate (upper substrate) 1002 are joined at the peripheries thereof by a sealing material 1004, so that the substrates are arranged in parallel with each other with a predetermined gap therebetween. A liquid crystal layer is filled in the inner portion defined by the sealing material 1004. On the inner surfaces of the substrates 1001 and 1002, transparent electrodes, etc., are formed. By applying predetermined voltages to the liquid crystal layer sandwiched between the substrates 1001 and 1002, the alignment state of the liquid crystal layer is changed, resulting in changes in the optical characteristics in order to display images.

Generally, the inner portion defined by the sealing material 1004 includes a portion which displays images, hereinbelow referred to as an effective display area 1050, and a portion of the display which does not display images, hereinbelow referred to as a non-effective display area 1060, of 10 to 15 pixels wide at the margins of the effective display area 1050. When the liquid crystal display 1000 is incorporated into various electronic devices, the size of the visible area of the display is set several millimeters larger than the above-described effective display area 1050 so that images can be viewed without hindrance even when the effective display area 1050 is slightly displaced relative to the housing frame of the electronic device when the electronic device is being assembled.

In Fig. 5, a portion of the liquid crystal display 1000 which is visible when the liquid crystal display 1000 is incorporated into the electronic device, i.e., the portion which includes the effective display area 1050 and part of the non-effective display area 1060, hereinafter referred to as the visible area, is represented by reference numeral 1070. When the liquid crystal display 1000 is incorporated into an electronic device, a portion of the liquid crystal display 1000 outside the visible area 1070 is covered by a housing or the like of the electronic device, and a user cannot see the covered portion. As for the visible area 1070 which is visible to the user, images are displayed only in the effective display area 1050. Consequently, there is an area which is outside the effective display area 1050 and which is part of the non-effective display area 1070. This area at the margins of the effective display area 1050 is referred to as a margin area 1080.

Generally, as liquid crystal displays, transmissive liquid crystal displays in which the light from a light source provided at the rear of a liquid crystal panel passes through the liquid crystal panel to be emitted towards the side of the user, and reflective liquid crystal displays in which ambient light such as sunlight and illumination enters the liquid crystal panel from the side of the user, is reflected at the liquid crystal panel, and is emitted to the side of the user are known in the art.

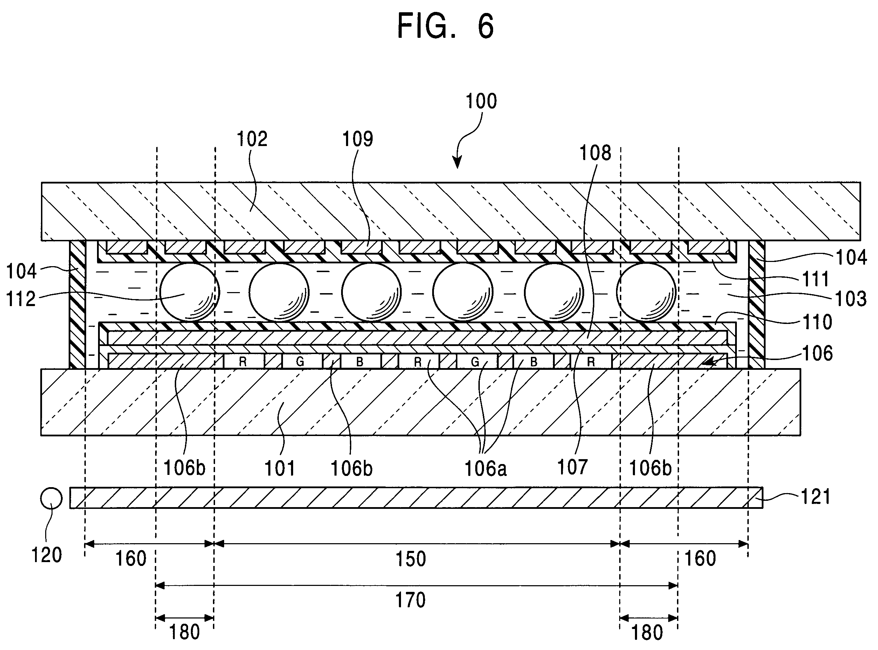

Fig. 6 is a perspective sectional view of a typical passive-matrix transmissive liquid crystal display 100, and the structure of this liquid crystal display will be briefly described. In Fig. 6, an effective display area, a non-effective display area, and a visible area are represented by reference numerals 150, 160, and 170, respectively. The portion which is outside the effective display area and yet part of the visible area is a margin area 180.

As shown in Fig. 6, a substrate (lower substrate) 101 and a counter substrate (upper substrate) 102 are joined at the peripheries thereof by a sealing material 104, so that the substrates are arranged in parallel with each other with a predetermined gap therebetween. Between the substrate 101 and the counter substrate 102, a liquid crystal layer 103 is enclosed. On the inner surface of the counter substrate 102, transparent electrodes 109 arranged in stripes are provided.

On the inner surface of the substrate 101, a color filter layer 106, comprising color layers 106a and a light-shielding layer (black mask) 106b, is formed. The color layers 106a are formed by a color resist method, a dyeing method, a transfer method, a printing method, etc., and three colors, for example, R (red), G (green), and B (blue), are arrayed in a predetermined pattern. The light-shielding layer (black mask) 106b is formed in the portion in which the color layer 106a is not formed and comprises a color resist in which metal such as chromium or black pigment is dispersed. In the color filter layer 106, the color layers 106a are formed only in the effective display area 150, and only the light-shielding layer (black mask) 106b is formed. in the non-effective display area 160.

On the color filter layer 106, a protective layer 107 and transparent electrodes 108 are successively formed. On the transparent electrodes 108 and 109, alignment layers 110 and 111 for aligning liquid crystals are respectively formed. Between the alignment layers 110 and 111, spherical spacers 112 made of glass, plastic, ceramic, etc., for making the thickness of liquid crystal cells uniform are disposed. At the rear of the liquid crystal panel, a light source 120, such as a cold cathode fluorescent tube, and a light guide plate 121, having an optimum end surface of incidence for the light source 120, for guiding light from the light source 120 into the liquid crystal panel are provided.

In the transmissive liquid crystal display 100, when the light source 120 is switched on, the light from the light source 120 is guided into the liquid crystal panel by the light guide plate 121, passes through the substrate 101, the liquid crystal layer 103, and the counter substrate 102 to be emitted from the liquid crystal panel, and reaches the eyes of a user. Since the liquid crystal display 100 is provided with the light source 120, the brightness of the display is not lowered and satisfactory brightness can be obtained even when the light-shielding layer (black mask) 106b is formed in the color filter layer 106. Also, because, in the color filter layer 106, the light-shielding layer (black mask) 106b is formed in the non-effective display area 160, the margin area 180, which is viewed by a user but does not display images, appears black, thereby improving the display quality of the effective display area 150.

In contrast, a reflective liquid crystal display is advantageous in that the display requires no electricity-consuming light source, reduction of weight can be achieved since a light source is not required, and high visibility can be obtained when used outdoors under the sunlight. The reflective liquid crystal displays have come into prominence, especially as the displays are incorporated into portable electronic devices.

However, since the reflective liquid crystal display does not have an internal light source, the display appears dim when used in places with not enough light. In order to overcome such a problem, a reflective liquid crystal display in which no light-shielding layer (black mask) is formed in the color filter layer has been proposed.

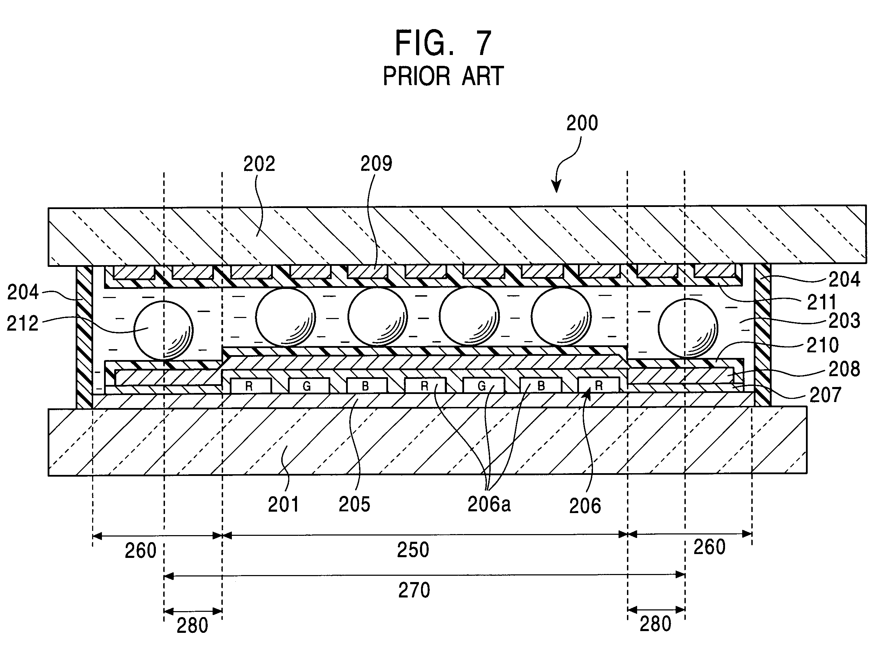

Fig. 7 is a perspective sectional view of a conventional passive-matrix reflective liquid crystal display 200 which does not have a light-shielding layer (black mask), and the structure of this liquid crystal display will be briefly described. In Fig. 7, an effective display area, a non-effective display area, and a visible area are represented by reference numerals 250, 260, and 270, respectively. The area outside of the effective display area and yet part of the visible area is a margin area 280.

As shown in Fig. 7, a substrate (lower substrate) 201 and a counter substrate (upper substrate) 202 are joined at the peripheries thereof by a sealing material 204, so that the substrates are arranged in parallel with each other with a predetermined gap therebetween. Between the substrate 201 and the counter substrate 202, a liquid crystal layer 203 is enclosed. On the inner surface of the counter substrate 202, transparent electrodes 209 arranged in stripes are provided.

On the inner surface of the substrate 201, a reflective layer 205 comprising a metal thin film of aluminum, silver, etc., is formed. On the reflective layer 205, a color filter layer 206 is formed. The color filter 206 does not have a light-shielding layer (black mask) formed, and only color layers 206a are provided therein, arrayed in a predetermined pattern. The color filter layer 206 is formed only in the effective display area 250.

On the color filter layer 206, a protective layer 207 for compensating for the irregularities of the color filter layer 206 is formed. On the protective layer 207, transparent electrodes 208 arrayed in stripes are formed.

On the transparent electrodes 208 and 209, alignment layers 210 and 211 for aligning liquid crystals are formed respectively. Between the alignment layers 210 and 211, spherical spacers 212 made of glass, plastic, ceramic, etc., for making the thickness of liquid crystal cells uniform are disposed. Although phase plates and polarizers are provided outside the substrate 201 and the counter substrate 202, these are not shown in the drawing.

In the transmissive liquid crystal display 200, ambient light from the sunor illuminations entering from the side of a user passes through the counter substrate 202 and the liquid crystal layer 203, is reflected at the surface of the reflective layer 205, passes through the liquid layer 203 and the counter substrate 202, and is emitted from the liquid crystal panel so as to reach the eyes of the user. Since the liquid crystal display 200 has the color filter layer 206 which does not include a light-shielding layer (black mask), the display is sufficiently visible even in a dark place.

However, because the color filter layer 206 is formed only in the effective display area 250 of the above-described reflective liquid crystal display 200, the margin area 280 at the margins of the effective display area 250, which is viewed by a user but does not display images, does not have a color filter layer 206 formed therein. Accordingly, from the margin area 280, intense light reflected at the reflective layer 205 is directly emitted to towards the user. Furthermore, since both the intense reflected light and the color of the reflective layer 205 directly appear in the margin area 280, color irregularities occur thereabout. As intense reflected light and color irregularities occur in the margin area 280, visibility of the effective display area 250 is impaired.

The visibility of the effective display area 250 is enhanced most when the margin area 280, being at the margins of the effective display area 250, appear black or close to black. Accordingly, it is preferable that the margin area 280 appear black or close to black.

The color filter layer 206 is formed only in the effective display area 250 and not in the non-effective display area 260. Consequently, on the surface of the protective layer 207 and the alignment layer 210 formed on the color filter layer 206, a step is formed at the border of the effective display area 250 and the non-effective display area 260 as shown in Fig. 7. Generally, the thickness of a liquid crystal cell is 6 to 7 µm and the height of this step is approximately 0.6 to 0.7 µm, i.e., approximately 10 percent of the cell thickness, which is a significant value. Since the spacers 212 are distributed on the alignment layer 210 in which a step is formed at the border of the effective display area 250 and the non-effective display area 260, the cell thickness of the liquid crystal cells becomes irregular, resulting in degraded display.

When there are irregularities in thickness of the liquid crystal cells, the following problems may arise. It is well known to those skilled in the art that the irregularities in the thickness of the liquid crystal cells impair the display characteristics of a liquid crystal display. Particularly for a liquid crystal display super twisted nematic (STN) mode, by varying a value Δn-d (Δn indicates the refractive index difference of the liquid crystal and d indicates the cell thickness), the light transmissivity varies. In other words, when the value Δn·d is varied, i.e., when there are irregularities in the cell thickness, the light transmissivity, i.e., the brightness, varies, resulting in degraded contrast.

When the variation of the value Δn·d is significant, i.e., when there are significant irregularities in cell thickness d, the yellowish or bluish color peculiar to the STN mode is eliminated by a phase plate and is corrected to black and white. When this is performed, the optical characteristics are degraded and color irregularities occur in the display. Also, irregularities in the cell thickness d impair the steepness of the electrooptical characteristics of the liquid crystal display, resulting in degraded contrast. As is apparent from the above, irregularities of the cell thickness d impair contrast, cause color irregularities to occur in the display, and reduce the quality of the display.

### SUMMARY OF THE INVENTION

Accordingly, it is an object of the present invention to overcome these problems encountered in the conventional art. The present invention provides a color filter substrate for use in a reflective liquid crystal display, in which the amount of light in a margin area reflected at a reflective layer is reduced and the surface of an alignment layer is made uniform at least in the visible area. Another object of the present invention is to provide a reflective liquid crystal display of superior display quality in which the cell thickness is uniform and the amount of light in the margin area reflected at the reflective layer is reduced by employing the above-described color filter substrate.

In order to achieve the above-described objects, the present invention provides a color filter substrate for use in a reflective liquid crystal display in which the color filter substrate is arranged to oppose another substrate with a sealing material therebetween and a liquid crystal layer is filled in the gap between the color filter substrate and the other substrate, the color filter substrate comprising: a substrate; a reflective layer formed on the substrate; and a color filter layer formed on the reflective layer, wherein the color filter layer is formed inside the sealing material, in a region which includes at least an effective display area and a margin area which is outside the effective display area and which is part of a visible area.

Preferably, in the portion of the color filter layer outside of the effective display area, color layers which constitute the color filter layer are arrayed in the same pattern as that in the effective display area.

In this manner, because the color filter layer is formed in both the effective display area and the margin area, the amount of light in the margin area reflected at the reflective layer is reduced, and a color filter substrate for a reflective liquid crystal display, which has an alignment layer having a uniform surface at least in the visible area can be obtained.

It is to be noted that the color filter substrate of the present invention can be manufactured without further complicating a conventional manufacturing process of color filter layers. Thus manufacturing efficiency is not decreased when compared with the conventional art.

Preferably, in the portion of the color filter layer outside of the effective display area, two color layers of two different colors selected from three different color layers which constitute the color filter layer are vertically aligned.

In this manner, the margin area appears close to black, thereby enhancing the visibility of the effective display area. It is preferable that the two color layers be a red color layer and a blue color layer since this combination is capable of presenting appearance close to black.

Preferably, in the portion of the color filter layer outside the effective display area, three different color layers which constitute the color filter layer are vertically aligned.

In this manner, a color filter substrate for use in a reflective liquid crystal display by which the margin area appears black and the visibility of the effective display area is further enhanced can be obtained.

Furthermore, the present invention also provides a reflective liquid crystal display comprising the above-described color filter substrate, wherein the color filter substrate is arranged to oppose the other substrate with the sealing material therebetween and the liquid crystal layer is filled in the gap between the color filter substrate and the other substrate.

### BRIEF DESCRIPTION OF THE DRAWINGS

Fig. 1 is a schematic plan view illustrating the structure of a reflective liquid crystal display according to a first embodiment of the present invention;
Fig. 2 is a schematic sectional view showing the structure of the reflective liquid crystal display according to the first embodiment of the present invention;
Fig. 3 is an enlarged sectional view schematically showing part of the structure of a reflective liquid crystal display according to a second embodiment of the present invention;
Fig. 4 is an enlarged sectional view schematically showing part of the structure of a reflective liquid crystal display according to a third embodiment of the present invention;
Fig. 5 is a schematic plan view showing the structure of a conventional liquid crystal display;
Fig. 6 is a schematic sectional view showing the structure of a conventional passive-matrix transmissive liquid crystal display; and
Fig. 7 is aschematic sectional view showing the structure of a conventional passive-matrix reflective liquid crystal display.

### DESCRIPTION OF THE PREFERRED EMBODIMENTS

Now, embodiments of the present invention will be described in detail.

### First Embodiment

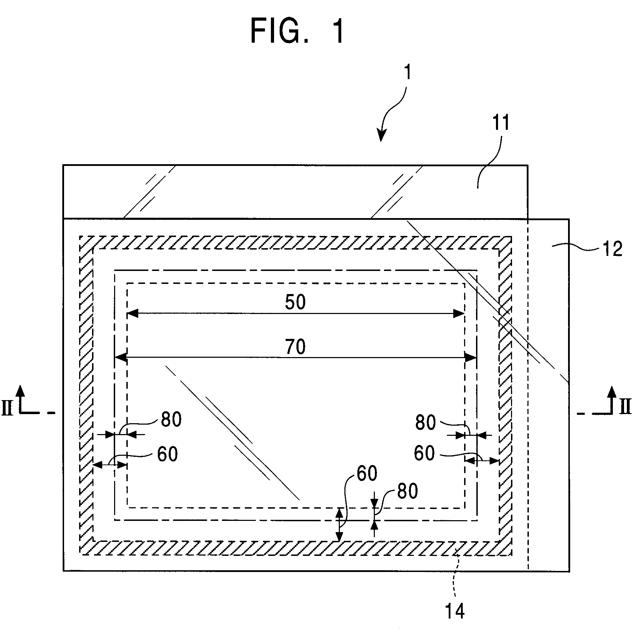

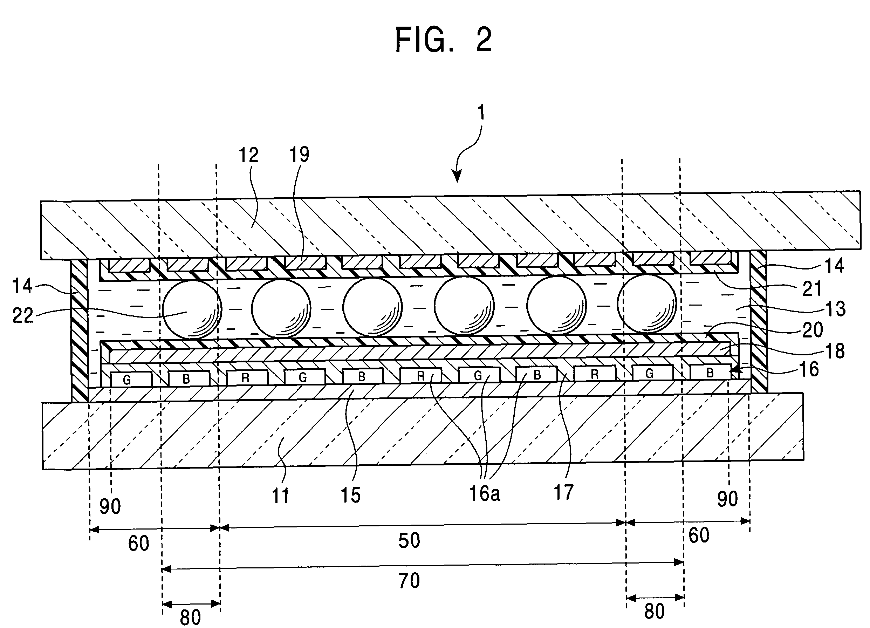

Fig. 1 is a schematic plan view of a passive-matrix reflective liquid crystal display 1 according to a first embodiment of the present invention and Fig. 2 is a schematic sectional view of the same. This liquid crystal display is described with reference to these drawings. Fig. 2 is a sectional view of the liquid crystal display 1 taken along the line II-II in Fig. 1.

As shown in Figs. 1 and 2, a substrate (lower substrate) 11 and a counter substrate (upper substrate) 12 are joined to one another by a sealing material 14 at the peripheries thereof so that the substrates are arranged in parallel with each other with a predetermined gap therebetween. A liquid crystal layer 13 is enclosed in the inner portion of the sealing material 14.

The inner portion of the liquid crystal display 1 defined by the sealing material 14 includes an effective display area 50 in the middle and an non-effective display area 60 of 10 to 15 pixels wide at the margins of the effective display area 50. The portion of the liquid crystal display 1 which is visible when the liquid crystal display 1 is incorporated into an electronic device, is referred to as a visible area 70. The visible area 70 is set to be several millimeters larger than the effective display area 50. A margin area 80 is the portion which is outside the effective display area 50 but still is part of the visible area 70. The margin area 80 is a portion which can be viewed by a user but does not display images.

On the substrate 11, a reflective layer 15 comprising a metal thin film of aluminum, silver, etc., is formed. On the reflective layer 15, a color filter layer 16 in which color layers 16a are arrayed in a predetermined pattern is formed. The color layers 16a are formed using a color resist method, a dyeing method, a transfer method, a printing method, etc., and three colors, for example, R (red), G (green), and B (blue), are arrayed in a predetermined pattern. An external peripheral portion 90 of the color filter layer 16 is set outside the visible area 70 and inside the sealing material 14. The color filter layer 16 is formed in a portion inside the sealing material 14 which includes at least the visible area 70 (which includes the effective display area 50 and the margin area 80).

On the color filter layer 16, a protective layer 17 for protecting the color filter layer 16 and for compensating for irregularities in the color filter layer 16 is formed. On the protective layer 17 and on the inner surface of the counter substrate 12, transparent electrodes 18 and 19 arrayed in stripes are respectively formed. On the transparent electrodes 18 and 19, alignment layers 20 and 21 for aligning the liquid crystals are respectively formed. Between the alignment layers 20 and 21, spherical spacers 22 comprising glass, plastic, ceramic, or the like, for making thickness of liquid crystal cells uniform are disposed. Outside the substrate 11 and the counter substrate 12, phase plates and polarizers are provided, but these are not shown in the drawings.

According to the present embodiment, because the color filter layer 16 is formed in the visible area 70 (which includes the effective display area 50 and the margin area 80), in the margin area 80, the amount of light reflected at the reflective layer 17 can be reduced and a reflective liquid crystal display having improved visibility in the effective display area 50 can be provided.

Furthermore, since the color filter layer 16 is formed in the visible area 70, the surface of the alignment layer 20 becomes uniform. Thus, the thickness of the liquid crystal cells becomes uniform and a reflective liquid crystal display having improved display quality can be obtained.

It is to be noted that the reflective liquid crystal display of the present embodiment can be manufactured without further complicating a conventional manufacturing process of color filter layers. Thus, the manufacturing efficiency does not decrease compared to that of conventional reflective liquid crystal displays.

Although the present embodiment has been described in terms of a liquid crystal display, the present invention also provides a color filter substrate for use in a reflective liquid crystal device, comprising the substrate 11 having the reflective layer 15, the color filter layer 16, the protective layer 17, the transparent electrodes 18, and the alignment layer 20. Such a color filter substrate reduces the amount of the light reflected at the reflective layer in the margin area and the surface of the alignment layer in the visible area is uniform at least in the visible area.

### Second Embodiment

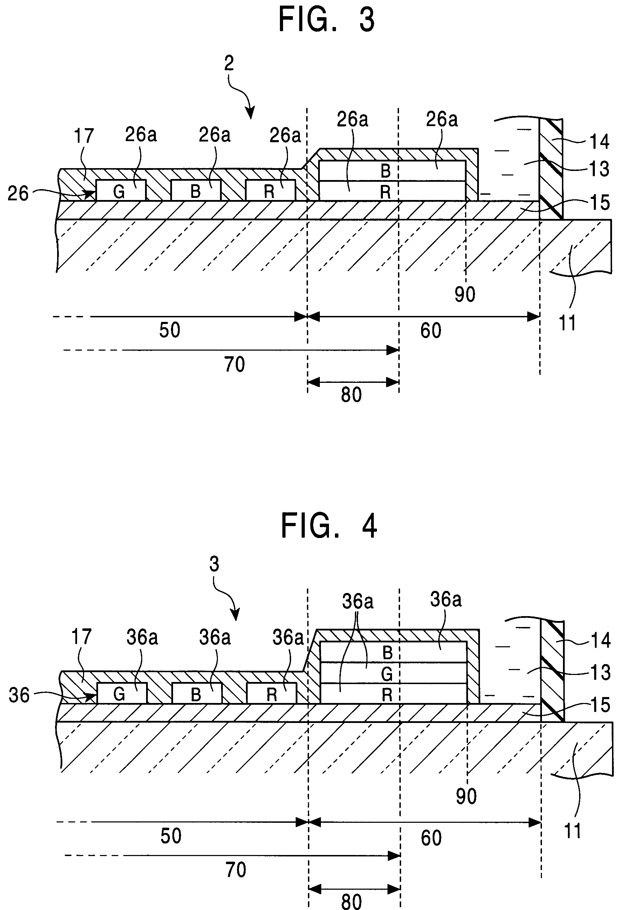

Fig. 3 is an enlarged sectional view schematically showing the vicinity of a sealing material in a color filter layer of a passive-matrix reflective liquid crystal display 2 according to a second embodiment of the present invention. The second embodiment has the same structure as the liquid crystal display 1 except for the structure of the color filter layer.

As shown in Fig. 3, an external peripheral portion 90 of a color filter layer 26 is, as in the first embodiment, set outside a visible area 70 and inside a sealing material 14. In other words, the color filter 26 is formed at least in a portion inside the sealing material 14 which includes at least the visible area 70 (which includes an effective display area 50 and a margin area 80). In the color filter layer 26 of this embodiment, color layers 26a are arrayed in a predetermined pattern in the effective display area 50, whereas two vertically-aligned color layers 26a, R (red) and B (blue), are provided outside the effective display area 50 On a protective layer 17, transparent electrodes 18 and an alignment layer 20 are formed as in the liquid crystal display 1, but these are not shown in the drawing.

Although the two color layers 26a of two colors, R (red) and B (blue), are vertically aligned in the portion of the color filter layer 26 outside the effective display area 50 in this embodiment, other color combinations may be employed as long as the two layers have different colors. The combination of R (red) and B (blue) is preferred most since this combination provides a color close to black.

According to the present embodiment, because the color filter layer 26 is formed in the visible area 70 (which includes the effective display area 50 and the margin area 80), the amount of light in the margin area 80 reflected at the reflective layer 17 can be reduced and a reflective liquid crystal display having improved visibility in the effective display area 50 can be provided.

Furthermore, because the two color layers 26a in two colors, R (red) and B (blue), are aligned in the portion of the color filter layer 26 outside of the effective display area 50, the margin area 80 appears close to black. Thus, a reflective liquid crystal display in which the visibility of the effective display area 50 is improved compared to the first embodiment can be provided.

The reflective liquid crystal display of the present embodiment can also be manufactured without further complicating a conventional manufacturing process of color filter layers. Thus, the manufacturing efficiency does not decrease compared to that of the conventional reflective liquid crystal displays.

The present embodiment also provides a color filter substrate for use in a reflective liquid crystal display, the color filter substrate comprising the substrate 11 having the reflective layer 15, the color filter layer 26, the protective layer 17, the transparent electrodes 18, and the alignment layer 20. According to the present invention, the amount of light in the margin area reflected at the reflective layer can be reduced and the margin area appears close to black. Thus, a color filter substrate for use in a reflective liquid crystal display in which visibility of the effective display area is further enhanced can be provided. Third Embodiment

Fig. 4 is an enlarged sectional view schematically showing the portion of a color filter layer in the vicinity of a sealing material of a passive-matrix reflective liquid crystal display 3 according to a third embodiment of the present invention. This reflective liquid crystal display has the same construction as that of the liquid crystal display 1 except for the structure of the color filter layer.

As shown in Fig. 4, an external peripheral portion 90 of a color filter layer 36 is set outside a visible area 70 and inside a sealing material 14, as in the first embodiment. In other words, the color filter layer 36 is formed in a portion inside the sealing material 14 which includes at least the visible area 70 (which includes the effective display area 50 and the margin area 80). In the portion of the color filter layer 36 inside the effective display area 50, color layers 36a arrayed in a predetermined pattern are formed. In the portion of the color filter layer 36 outside the effective display area, three color layers 36a in three colors R (red), G (green), and B (blue) are aligned in the vertical direction. The color layers 36a of three colors R (red), G (green), and B (blue), are aligned vertically so as to appear of black. On a protective layer 17, transparent electrodes 18 and an alignment layer 20 are formed as in the liquid crystal display 1, but these are not shown in the drawing.

According to this embodiment, because the color filter layer 36 is formed at least in the visible area 70 (which includes the effective display area 50 and the margin area 80), the amount of light in the margin area 80 reflected at the reflective layer 15 can be reduced and a reflective liquid crystal display in which the visibility of the effective display area 50 is improved can be provided. Furthermore, since the portion of the color filter layer 36 outside the effective display area 50 is provided with three color layers 36a in three colors, R (red), G (green), and B (blue), arranged to be aligned vertically, the margin area 80 appears black. Thus, a reflective liquid crystal display in which the visibility of the effective display area 50 is further enhanced compared to the first and the second embodiments can be provided.

It is to be noted that, as in the first and the second embodiments, the liquid crystal display of this embodiment can be manufactured without further complicating the conventional manufacturing process of color filter layers. Thus, the reflective liquid crystal display of this embodiment can be manufactured without decreasing the manufacturing efficiency.

This embodiment also provides a color filter substrate comprising the substrate 11 having the reflective layer 15, the color filter layer 36, the protective layer 17, the transparent electrodes 18 and the alignment layer 20. The color filter substrate of the present invention, for use in a reflective liquid crystal display, reduces the amount of light in the margin area reflected at the reflective layer, thereby yielding a margin area which appears black and enhancing the visibility of the effective display area.

It is to be understood that although the first to the third embodiments have been described in relation with passive-matrix liquid crystal displays, the scope of the invention is not limited to these. For example, the present invention may be applied to active-matrix liquid crystal displays such as those using two-terminal elements, typically MIMs (Metal-Insulator-Metal), or those using three-terminal elements, typically TFTs (Thin-Film Transistors). The present invention can be applied to any reflective liquid crystal display comprising a reflective layer and a color filter layer formed on the reflective layer.

As described above, the present invention provides a color filter substrate for use in a reflective liquid crystal display, in which, by providing a color filter layer in both the effective display area and the margin area, the amount of light in the margin area reflected at the reflective layer is reduced and the surface of the alignment layer is made uniform. By using this color filter substrate, a high-visibility reflective liquid crystal display having uniform cell thickness, in which the amount of light in the margin area reflected at the reflective layer is reduced, can be provided.

Furthermore, when part of the color filter layer outside of the effective display area is provided with two or three color layers aligned vertically, the margin area may appear black or close to black. Thus, a color filter substrate for a reflective liquid crystal display and a reflective liquid crystal display, both in which the effective display portion has superior visibility, can be provided.

It is to be noted that since the color filter substrate and the reflective liquid crystal display of the present invention can be manufactured without further complicating a conventional manufacturing process of color filter layers, the substrate and the display of the present invention can be manufactured without decreasing the manufacturing efficiency.

## Claims

1. A color filter substrate for use in a reflective liquid crystal display in which the color filter substrate is arranged to oppose another substrate with a sealing material therebetween and a liquid crystal layer is filled in the gap between the color filter substrate and the other substrate, the color filter substrate comprising:
a substrate;
a reflective layer formed on the substrate; and
a color filter layer formed on the reflective layer,
wherein the color filter layer is formed inside the sealing material in a region which includes at least an effective display area and a margin area which is outside the effective display area and which is part of a visible area.

2. A color filter substrate for use in a reflective liquid crystal display according to Claim 1, wherein, in the portion of said color filter layer outside of the effective display area, color layers which constitute said color filter layer are arrayed in the same pattern as that in the effective display area.

3. A color filter substrate for use in a reflective liquid crystal display according to Claim 1, wherein, in the portion of said color filter layer outside the effective display area, two color layers of two different colors selected from three different color layers which constitute said color filter layer are vertically aligned.

4. A color filter substrate for use in a reflective liquid crystal display according to Claim 3, wherein said two color layers comprise a red color layer and a blue color layer.

5. A color filter substrate for use in a reflective liquid crystal display according to Claim 1, wherein, in the portion of said color filter layer outside the effective display area, three different color layers which constitute said color filter layer are vertically aligned.

6. A reflective liquid crystal display comprising a color filter substrate according to Claim 1, wherein the color filter substrate is arranged to oppose the other substrate with the sealing material therebetween and the liquid crystal layer is filled in the gap between the color filter substrate and the other substrate.

7. A reflective liquid crystal display according to Claim 6, wherein, in the portion of said color filter layer outside the effective display area, color layers which constitute said color filter layer are arrayed in the same pattern as that in the effective display area.

8. A reflective liquid crystal display according to Claim 6, wherein, in the portion of said color filter layer of said color filter substrate outside the effective display area, two color layers of two different colors selected from three different color layers which constitute said color filter layer are vertically aligned.

9. A reflective liquid crystal display according to Claim 8, wherein said two color layers of the color filter substrate comprise a red color layer and a blue color layer.

10. A reflective liquid crystal display according to Claim 6, wherein, in the portion of said color filter layer of the color filter substrate outside the effective display area, three different color layers which constitute said color filter layer are vertically aligned.
